# EUROPÄISCHE PATENTSCHRIFT

(11) **EP 2 758 658 B1**
(45) Veröffentlichungstag und Bekanntmachung des Hinweises auf die Patenterteilung: **13.12.2017**
(21) Anmeldenummer: 12761902.1
(22) Anmeldetag: 10.09.2012
(51) Int. Cl.: F03D 1/06, F03D 80/00

(54) **SCHOTT EINER WINDTURBINENSCHAUFEL**
BULKHEAD FOR WIND TURBINE BLADE
CLOISON POUR PALE D'ÉOLIENNE

(30) Priorität: 21.09.2011 DE 102011083152
(43) Veröffentlichungstag der Anmeldung: 30.07.2014
(73) Patentinhaber: Senvion GmbH, 22297 Hamburg (DE)
(72) Erfinder: ZELLER, Lenz Simon, 24242 Felde (DE)
(74) Vertreter: Seemann & Partner Patentanwälte mbB
(86) Internationale Anmeldenummer: PCT/EP2012/003784
(87) Internationale Veröffentlichungsnummer: WO 2013/041190

(56) Entgegenhaltungen:
- EP-A1- 1 775 463
- EP-A2- 0 387 400
- EP-A2- 1 925 818
- WO-A1-2009/085041
- US-B1- 7 922 454

## Beschreibung

Die Erfindung betrifft ein Schott einer Windenergieanlage zur Anordnung an oder in der Nähe von einem Anschlussbereich von einem Rotorblatt an einer Rotornabe. Die Erfindung betrifft des Weiteren eine Anordnung eines Schotts einer Windenergieanlage. Die Erfindung betrifft außerdem ein Rotorblatt und eine Rotornabe.

Im Stand der Technik sind Abschlussplattformen bekannt, die im Bereich eines Rotorblattanschlusses, d.h. des Befestigungsbereichs von einem Rotorblatt an einer Rotornabe, üblicherweise auf Seiten des Rotorblatts, vorgesehen sind. Derartige Abschlussplattformen sind in der Regel Platten aus Metall oder Verbundwerkstoffen, die zum einen die jeweiligen Hohlräume des Rotorblatts und der Rotornabe voneinander trennen und zum anderen als Standplattform bei Arbeiten am Rotorblattanschluss dienen können.

Bekannte Abschlussplattformen sind oftmals mit verschließbaren Öffnungen oder Luken ausgestattet, um einen Zugang zum Inneren des Rotorblatts von der Rotornabe aus zu ermöglichen.

Des Weiteren sind winkelförmige Befestigungen für die Abschlussplattform bekannt, die mit der Abschlussplattform einerseits und dem Rotorblatt andererseits verschraubt und/oder verklebt sind. Die Verbindungen sind dabei gegebenenfalls mit zusätzlichen Dämpfungselementen ausgeführt, um Relativbewegungen oder Schwingungen abzufedern.

US 7 922 454 B1 offenbart ein Blattsegment eines Rotorblattes, das aus mehreren Blattsegmenten hergestellt ist. Hierbei kann ein Steg zwischen zwei gegenüberliegenden Gurten angeordnet sein. Zum Verbinden zweier Blattteile ist ein aus dem einen Blattteil herausstehendes Element vorgesehen und beim anderen Blattteil eine hiermit korrespondierende Gegenform.

WO 2009/085041 A1 offenbart ein Schott, das in der Nähe einer Rotorblattwurzel angeordnet ist. Das Schott 304 ist hierbei mit einem flexiblen Flansch verbunden und ermöglicht die Bewegung der Rotorblattwurzel hin oder weg von dem Schott.

Die Aufgabe der vorliegenden Erfindung besteht darin, ein Schott einer Windenergieanlage anzugeben, das konstruktiv einfach ist und bei der Montage wenig Zeitaufwand erfordert.

Diese Aufgabe wird gelöst durch ein Schott einer Windenergieanlage zur Anordnung an oder in der Nähe von einem Anschlussbereich von einem Rotorblatt, insbesondere einer Rotorblattwurzel, an eine Rotornabe, wobei das Schott einen Abschlussdeckel und eine Aufhängevorrichtung zur Befestigung am Rotorblatt oder an der Rotornabe umfasst, wobei der Abschlussdeckel und die Aufhängevorrichtung in einem in Faser-Laminat-Bauweise gefertigt sind.

Dabei wird das erfindungsgemäße Schott entweder auf der Rotorblattseite oder auf der Rotornabenseite des Anschlussbereichs angeordnet. Insbesondere kann das Schott am oder in der Nähe vom Anschlussbereich entweder am Rotorblatt oder an der Rotornabe befestigt sein oder werden.

Durch die Erfindung wird die Anzahl der herzustellenden Verbindungen zwischen dem Schott und dem Rotorblatt bzw. der Rotornabe gegenüber dem Stand der Technik halbiert, weil geeignete Befestigungsmittel nicht erst mit dem Abschlussdeckel verbunden werden müssen, sondern lediglich eine Befestigung der Aufhängevorrichtung an dem Rotorblatt oder der Rotornabe erfolgt. Gleichzeitig wird die Anzahl der zur Montage erforderlichen Einzelteile, beispielsweise Befestigungswinkel, Schrauben und Muttern oder Dämpfungselemente, vorteilhafterweise verringert und der Montageaufwand, beispielsweise für das Herstellen von Bohrungen, reduziert.

Die Ausführung des Schotts in Faser-Laminat-Bauweise ermöglicht auf besonders einfache Weise die Herstellung eines einzigen Bauteils, das den Abschlussdeckel und die Aufhängevorrichtung in einem vereint. Zudem sind derartige Faser-Laminat-Bauteile relativ leicht, was wiederum die Montage des Schotts vereinfacht.

Die Faser-Laminat-Bauweise erlaubt zudem die Herstellung von Bauteilen mit abschnittsweise sehr unterschiedlichen Eigenschaften. Insbesondere sind steife, flächige Abschnitte, beispielsweise für die Abschlussdeckel, mit flexiblen, zugbelastbaren Abschnitten für die Aufhängevorrichtung in einem Bauteil kombinierbar. Dadurch wird ein Schott ermöglicht, das selbstfedernd ausgebildet ist, so dass zusätzliche Dämpfungselemente eingespart werden. Die Kombination in einem Bauteil ist besonders einfach durch die Fertigung in einem, insbesondere einem Stück, ermöglicht.

Bevorzugterweise wird das Schott an oder in der Nähe von einem Anschlussbereich von einem Rotorblatt, insbesondere einer Rotorblattwurzel, an einer Rotornabe angeordnet. In diesem Bereich sind das Rotorblatt bzw. die Rotorblattwurzel und die Rotornabe in der Regel rund ausgebildet, so dass für das Schott insbesondere eine runde oder im Wesentlichen runde und somit konstruktiv besonders einfache Form ermöglicht ist. Hierdurch ist zudem eine rotationssymmetrische Ausbildung des Schotts ermöglicht, so dass bei der Montage des Schotts nur geringe Anforderungen an Montagetoleranzen in tangentialer Richtung, d.h. gegenüber einer Verdrehung des Schotts im Rotorblatt oder in der Rotornabe, gestellt werden.

Außerdem ist ein Rotorblatt an seinem nabennahen Bereich, insbesondere an der Rotorblattwurzel, in der Regel verstärkt ausgebildet. Dort treten daher weniger Schwingungen, Verformungen und Relativbewegungen auf, die von dem Schott oder dessen Befestigung aufgenommen werden müssten. Dadurch wird die Konstruktion des Schotts, insbesondere der Aufhängevorrichtung, weiter vereinfacht.

Bevorzugt umfasst das Schott ein Laminat mit glasfaserverstärktem Kunststoff. Derartige Laminate sind einfach zu verarbeiten, bieten ein günstiges Verhältnis von Gewicht und Stabilität und sind kostengünstig.

Bei einem besonders bevorzugten Schott ist die Aufhängevorrichtung als umlaufender, insbesondere durchgängiger, Laminatwinkel ausgebildet. Hierdurch ergibt sich insbesondere der zusätzliche Vorteil, dass das Schott mit dem gesamten Umfang am Rotorblatt oder an der Rotornabe anliegen kann, wodurch eine separate Abdichtung zwischen Schott und Rotorblatt oder Rotornabe eingespart und die Montage des Schotts weiter vereinfacht wird.

Besonders vorteilhaft ist es, wenn die Aufhängevorrichtung eine Kontaktfläche zur Befestigung des Schotts, insbesondere zur Verklebung am Rotorblatt oder an der Rotornabe, aufweist. Dadurch ergibt sich vorteilhafterweise ein flächiger Kontakt zwischen der Aufhängevorrichtung und dem Rotorblatt oder der Rotornabe. Dies ermöglicht insbesondere eine großflächige und entsprechend stabile Klebeverbindung.

Bevorzugterweise ist die Kontaktfläche der Aufhängevorrichtung zudem gerade und/oder konisch ausgebildet. Hierdurch werden auf einfache Weise großflächige Kontaktflächen zur sicheren Verbindung oder Verklebung des Schotts mit dem Rotorblatt bereitgestellt.

Eine gerade Kontaktfläche beschreibt beispielsweise im Wesentlichen die Form eines Zylindermantels und eine konische Kontaktfläche beschreibt beispielsweise im Wesentlichen die Form eines Mantels eines Kegelstumpfes. Es können Mischformen hiervon vorgesehen sein.

Eine konische Kontaktfläche hat insbesondere den Vorteil, dass kleinere Fertigungsungenauigkeiten ausgeglichen werden können und eine optimale Einpassung des Schotts in das Rotorblatt oder die Rotornabe gewährleistet ist. Dieser Effekt kann dadurch noch erhöht werden, dass an dem Rotorblatt oder der Rotornabe eine im Wesentlichen formkomplementäre, insbesondere ebenfalls konische, Auflagefläche zum Zusammenwirken mit der Kontaktfläche vorgesehen ist. Die konische und/oder gerade Ausgestaltung der Kontaktfläche ist insbesondere relativ zu einer Längsachse des Rotorblatts zu verstehen.

Das Schott, insbesondere der Abschlussdeckel, weist vorteilhafterweise wenigstens eine, insbesondere verschließbare, Durchsteigeöffnung auf. Dadurch wird insbesondere der Zugang zum Inneren des Rotorblatts von der Rotornabe aus gewährleistet. Form, Lage und Anzahl der Durchsteigeöffnungen sind dabei entsprechend den Gegebenheiten des Einzelfalls geeignet wählbar.

Wenn das Schott, insbesondere der Abschlussdeckel, auf einer dem Anschlussbereich zugewandten Seite eine Anti-Rutsch-Beschichtung aufweist, wird das Schott zu einer besonders sicheren Montage- oder Wartungsplattform, beispielsweise für Arbeiten an einer Verschraubung oder sonstigen Befestigung zwischen dem Rotorblatt und der Rotornabe. Die Anti-Rutsch-Beschichtung umfasst beispielsweise gebundenen Sand.

Auf einer der Rotorblattspitze zugewandten Seite weist das Schott vorzugsweise einen Aufprallschutz auf. Dadurch wird verhindert, dass das Schott durch fallende Gegenstände im Inneren des Rotorblatts, beispielsweise losgelöste Harzklumpen, beschädigt wird. Ein geeigneter Aufprallschutz umfasst beispielsweise Gummimatten oder Metallplatten, die am Schott bzw. am Abschlussdeckel angebracht sind.

Die Aufgabe wird auch gelöst durch eine Anordnung eines erfindungsgemäßen Schotts an oder in der Nähe von einem Anschlussbereich von einem Rotorblatt, insbesondere einer Rotorblattwurzel, an eine Rotornabe.

Die Aufgabe wird ferner gelöst durch ein Rotorblatt mit einem erfindungsgemäßen Schott. Die Aufgabe wird außerdem gelöst durch eine Rotornabe mit einem erfindungsgemäßen Schott.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: schematisch einer Windenergieanlage,
- Fig. 2: schematisch ein Rotorblatt mit einem erfindungsgemäßen Schott,
- Fig. 3a: schematisch ein erfindungsgemäßes Schott in Draufsicht sowie
- Fig. 3b: schematisch eine Schnittdarstellung entlang der Linie A-A in Fig. 3a und
- Fig. 4: schematisch die Anordnung eines erfindungsgemäßen Schotts an einer Rotorblattwurzel.

In den Zeichnungen sind jeweils gleiche oder gleichartige Elemente und/oder Teile mit denselben Bezugsziffern versehen, so dass von einer erneuten Vorstellung jeweils abgesehen wird.

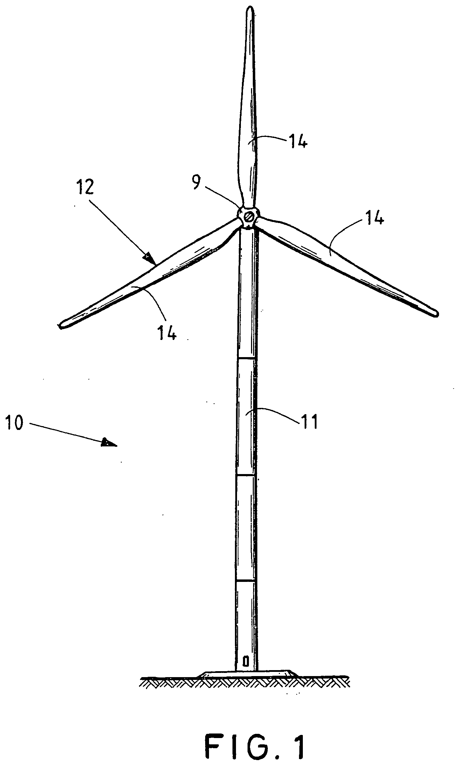

Fig. 1 zeigt eine schematische Darstellung einer Windenergieanlage 10. Die Windenergieanlage 10 weist einen Turm 11 auf und einen Rotor 12, der drei Rotorblätter 14 umfasst, die auf einer Rotornabe 9 angebracht sind. Die Rotornabe 9 ist mit einer nicht dargestellten Rotorwelle verbunden. Bei Windeinfall dreht sich der Rotor 12 in an sich bekannter Weise. Hierdurch kann Leistung von einem an den Rotor 12 bzw. den über die Rotornabe 9 und die Rotorwelle 13 angeschlossenen Generator erzeugt werden und in ein Verbrauchernetz abgegeben werden.

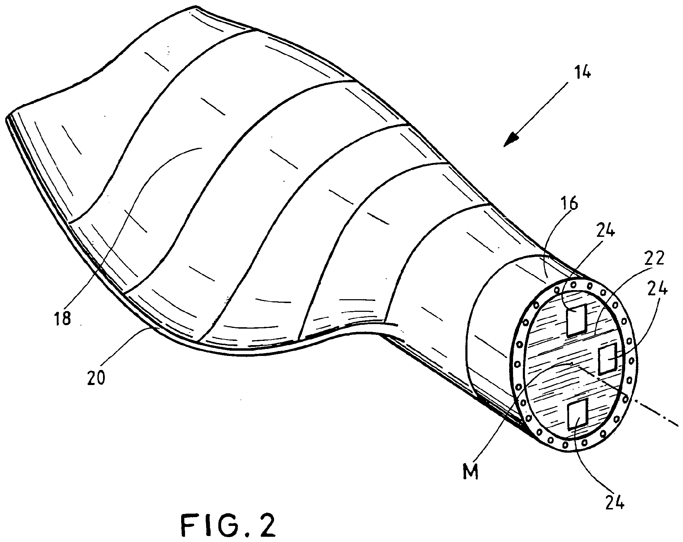

Fig. 2 zeigt einen unteren Abschnitt eines Rotorblatts 14 in einer perspektivischen Darstellung. Das Rotorblatt 14 verfügt auf der der Rotornabe 9 zugewandten Seite über eine so genannte Rotorblattwurzel 16, die im Querschnitt im Allgemeinen rund oder im Wesentlichen kreisförmig ausgebildet ist. Das Rotorblatt 14 selbst ist im Inneren hohl. Das Rotorblatt 14 ist zwischen der Rotorblattwurzel 16 und der Rotorblattspitze profiliert ausgebildet und verfügt über eine Druckseite 18. Der Druckseite 18 ist auf der hier nicht bezeichneten gegenüberliegenden Seite die dazugehörige Saugseite zugeordnet.

Die entsprechenden Rotorblattprofile entlang der Längsachse des Rotorblatts 14 laufen an der Hinterkante 20 des Rotorblatts 14 zusammen. Im Bereich der Rotorblattwurzel 16 ist ein Schott 22 in dem Rotorblatt 14 angeordnet, wobei es in einer Ausgestaltung möglich ist, das Schott 22 in die Rotorblattwurzel 16 einzukleben. Das Schott 22 ist fest an der Rotorblattwurzel 16 montiert oder darin eingesetzt.

In einer alternativen Ausführung der Erfindung, die nicht dargestellt ist, ist das Schott 22 an der Rotornabe 9 angeordnet bzw. montiert oder darin eingesetzt, wobei auch in dieser Ausführungsform der Übergang des hohlen Rotorblatts 14 zur ebenfalls hohlen Rotornabe 9 mittels des Schotts 22 verschlossen ist.

Das in Fig. 2 dargestellte Schott 22 ist, wie die Rotorblattwurzel 16, kreisförmig ausgebildet und verfügt über drei Durchsteigeöffnungen 24. Die Durchsteigeöffnungen sind so dimensioniert, dass eine Person nach Öffnung einer Luke an der Durchsteigeöffnung 24 von der Rotornabe in den Innenraum des Rotorblatts 14 steigen kann.

Durch das Schott 22 wird ein Hineinfallen von Gegenständen oder von Personen aus der Rotornabe 9 in das Rotorblatt 14 und umgekehrt verhindert sowie das Rotorblatt 14 gegenüber der Rotornabe 9 bezüglich Schmutz und/oder Feuchtigkeit abgedichtet. Gleichzeitig kann das Schott 22 als entsprechende Arbeitsplattform bei Wartungsarbeiten an der Rotornabe 9 oder am Rotorblatt 14 eingesetzt werden.

Darüber hinaus ist in Fig. 2 die Drehachse 26 des Rotorblatts 14 mit einer strich-punktierten Linie eingezeichnet, in die das Rotorblatt 14 relativ zur Rotornabe 9 zur Einstellung des Blattwinkels, der auch als Pitchwinkel bezeichnet wird, drehbar gelagert ist. Die Drehachse schneidet die Ebene des Schotts 22 beispielsweise in dessen geometrischem Mittelpunkt M.

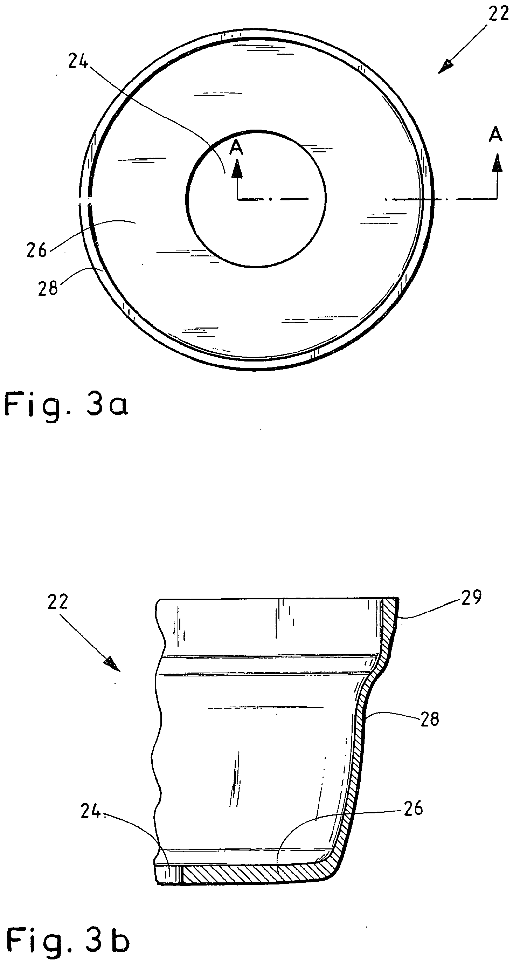

Fig. 3a zeigt eine schematische Draufsicht auf eine weitere Ausführungsform eines erfindungsgemäßen Schotts 22. Das Schott 22 ist im Wesentlichen rotationssymmetrisch aufgebaut und weist einen Abschlussdeckel 26 auf, in dem etwa mittig eine runde Durchsteigeöffnung 24 vorgesehen ist. Die Durchstiegsöffnung 24 ist mittels einer nicht dargestellten Luke verschließbar.

Ferner umfasst das Schott 22 eine Aufhängevorrichtung, die als umlaufender, durchgängiger Laminatwinkel 28 ausgebildet ist. Alternativ ist im Rahmen der Erfindung auch denkbar, dass mehrere, in radialer Richtung voneinander beabstandete oder voneinander getrennte Befestigungswinkel als Aufhängevorrichtung vorgesehen sind.

In Fig. 3b ist eine Schnittdarstellung entlang der Linie A-A in Fig. 3a gezeigt. Der umlaufende Laminatwinkel 28 ist in einem mit dem Abschlussdeckel 26 aus einem Faser-Laminat, beispielsweise einem Laminat mit glasfaserverstärktem Kunststoff, gefertigt. Dadurch bilden der Abschlussdeckel 26 und der umlaufende Laminatwinkel 28 ein einzelnes, integriertes Faser-Laminat-Bauteil, wobei der Laminatwinkel 28 eine Ausdehnung im Wesentlichen quer zur Fläche des Abschlussdeckels 26 aufweist.

Der dem Abschlussdeckel 26 abgewandte Rand des Laminatwinkels 28 ist bei dem in Fig. 3b dargestellten Ausführungsbeispiel verstärkt ausgebildet und weist eine nach außen gerichtete Kontaktfläche 29 auf, mittels der das Schott 22 an einem Rotorblatt 14, beispielsweise einer Rotorblattwurzel 16, oder einer Rotornabe 9 befestigt wird. Die Kontaktfläche 29 ist leicht angeschrägt oder konisch ausgebildet, um die Passung des Schotts 22 in dem Rotorblatt 14 bzw. der Rotornabe 9 zu verbessern.

Der Laminatwinkel 28 ist im Vergleich zum Abschlussdeckel 26 relativ dünn ausgebildet und weist eine gewisse Flexibilität auf. Dadurch wird eine Dämpfungswirkung für das Schott 22 relativ zum Rotorblatt 14 bzw. der Rotornabe 9 bewirkt.

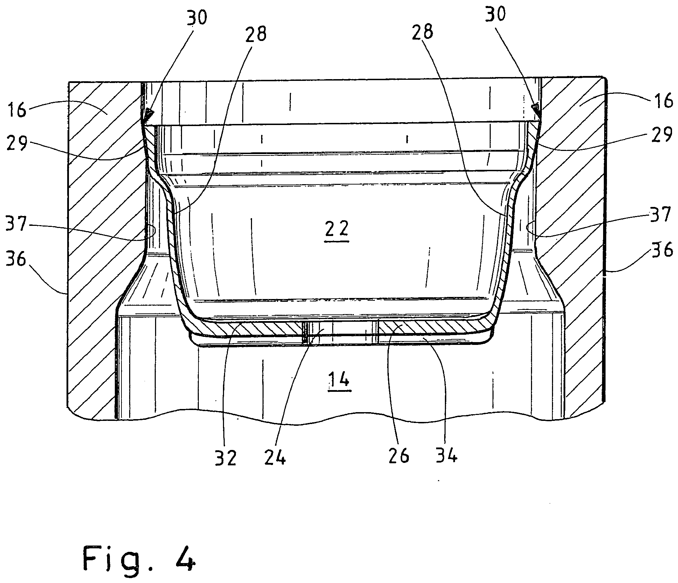

Fig. 4 zeigt in einer schematischen und ausschnittsweise vergrößerten Schnittdarstellung ein erfindungsgemäßes Schott 22, das an bzw. in einer Rotorblattwurzel 16 befestigt ist. Gezeigt ist der nabennahe Bereich eines Rotorblatts 14 in einer Schnittdarstellung, wobei das Rotorblatt 14 in einer verstärkten oder versteiften Rotorblattwurzel 16 ausläuft. Die Rotorblattwurzel 16 weist einen im Wesentlichen runden Querschnitt mit einer Außenseite 36 und einer Innenseite 37 auf. Nicht dargestellt sind Befestigungsmittel an der Rotorblattwurzel 16 zum Anschluss von dem Rotorblatt 14 an die Rotornabe 9.

Ein erfindungsgemäßes Schott 22 ist innerhalb der Rotorblattwurzel 16 angeordnet, so dass die Kontaktfläche 29 des Schotts 22 im Wesentlichen gegenüberliegend zu der Innenseite 37 der Rotorblattwurzel 16 angeordnet ist. Zwischen der Kontaktfläche 29 und der Innenseite 37 besteht eine Klebeverbindung 30, die sich im Wesentlichen über den gesamten Umfang der Rotorblattwurzel 16 bzw. des Schotts 22 erstreckt. Die Innenseite 37 kann dabei eine angeschrägte oder konische Auflagefläche, die insbesondere im Wesentlichen formkomplementär zur Kontaktfläche 29 ausgebildet ist, für die Kontaktfläche 29 aufweisen, um die Passform zwischen dem Schott 22 und dem Rotorblatt 14 bzw. der Rotorblattwurzel 16 zu verbessern.

In Fig. 4 ist zudem gezeigt, dass der Abschlussdeckel 26 auf der der Rotorblattwurzel 16 zugewandten Seite eine Antirutschbeschichtung 32 aufweist. Somit bietet das Schott 22 bzw. der Abschlussdeckel 26 des Schotts 22 einen sicheren und rutschfesten Untergrund für die Montage oder Wartung des Rotorblatts 14, der Rotornabe 9 oder des Anschlussbereichs von dem Rotorblatt 14, insbesondere der Rotorblattwurzel 16, an die Rotornabe 9.

Die andere Seite des Abschlussdeckels 26, die der Rotorblattspitze und somit dem im Wesentlichen Inneren des Rotorblatts 14 zugewandt ist, ist mit einem Aufprallschutz 34 versehen. Hierbei handelt es sich beispielsweise um Gummimatten oder Metallplatten, die das Schott 22 vor losen Teilen im Hohlraum des Rotorblatts 14, beispielsweise abgelösten Harzklumpen, schützen.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 9: Rotornabe
- 10: Windenergieanlage
- 11: Turm
- 12: Rotor
- 14: Rotorblatt
- 16: Rotorblattwurzel
- 18: Druckseite
- 20: Hinterkante
- 22: Schott
- 24: Durchsteigeöffnung
- 26: Abschlussdeckel
- 28: Laminatwinkel
- 29: Kontaktfläche
- 30: Klebeverbindung
- 32: Antirutschbeschichtung
- 34: Aufprallschutz
- 36: Außenseite
- 37: Innenseite
- M: Mittelpunkt

## Patentansprüche

1. Schott (22) einer Windenergieanlage (10) zur Anordnung an oder in der Nähe von einem Anschlussbereich von einem Rotorblatt (14), an eine Rotornabe (9), wobei das Schott (22) einen Abschlussdeckel (26) und eine Aufhängevorrichtung (28) zur Befestigung am Rotorblatt (14) oder an der Rotornabe (9) umfasst, **dadurch gekennzeichnet, dass** der Abschlussdeckel (26) und die Aufhängevorrichtung (28) in einem in Faser-Laminat-Bauweise gefertigt sind.

2. Schott (22) nach Anspruch 1, **dadurch gekennzeichnet, dass** das Schott (22) ein Laminat mit glasfaserverstärktem Kunststoff umfasst.

3. Schott (22) nach Anspruch 1 oder 2, **dadurch gekennzeichnet, dass** die Aufhängevorrichtung (28) als umlaufender, insbesondere durchgängiger, Laminatwinkel (28) ausgebildet ist.

4. Schott (22) nach einem der Ansprüche 1 bis 3, **dadurch gekennzeichnet, dass** die Aufhängevorrichtung (28) eine Kontaktfläche (29) zur Befestigung des Schotts (22), insbesondere zur Verklebung am Rotorblatt (14) oder an der Rotornabe (9), aufweist.

5. Schott (22) nach Anspruch 4, **dadurch gekennzeichnet, dass** die Kontaktfläche (29) der Aufhängevorrichtung (28) gerade und/oder konisch ausgebildet ist.

6. Schott (22) nach einem der Ansprüche 1 bis 5, dadurch ausgebildet, dass das Schott (22), insbesondere der Abschlussdeckel (26), wenigstens eine, insbesondere verschließbare, Durchsteigeöffnung (24) aufweist.

7. Schott (22) nach einem der Ansprüche 1 bis 6, **dadurch gekennzeichnet, dass** das Schott (22), insbesondere der Abschlussdeckel (26), auf einer dem Anschlussbereich zugewandten Seite eine Anti-Rutsch-Beschichtung (32) aufweist.

8. Schott (22) nach einem der Ansprüche 1 bis 7, **dadurch gekennzeichnet, dass** das Schott (22), insbesondere der Abschlussdeckel (26), auf einer der Rotorblattspitze zugewandten Seite einen Aufprallschutz (34) aufweist.

9. Anordnung eines Schotts (22) an oder in der Nähe von einem Anschlussbereich von einem Rotorblatt (14), wobei das Schott (22) nach einem der Ansprüche 1 bis 8 ausgebildet ist.

10. Rotorblatt (14) mit einem Schott (22) nach einem der Ansprüche 1 bis 8.

11. Rotornabe (9) mit einem Schott (22) nach einem der Ansprüche 1 bis 8.

## Claims

1. A bulkhead (22) of a wind power plant (10) for arrangement on or in the vicinity of a connection region of a rotor blade (14), to a rotor hub (9), wherein the bulkhead (22) comprises a cover (26) and a suspension device (28) for attachment to the rotor blade (14) or to the rotor hub (9), **characterized in that** the cover (26) and the suspension device (28) are fabricated in one in a fiber-laminate design.

2. The bulkhead (22) according to Claim 1, **characterized in that** the bulkhead (22) comprises a laminate with glass-fiber reinforced plastic.

3. The bulkhead (22) according to Claim 1 or 2, **characterized in that** the suspension device (28) is configured as a circumferential, in particular continuous, laminate bracket (28).

4. The bulkhead (22) according to any one of Claims 1 to 3, **characterized in that** the suspension device (28) has a contact surface (29) for attachment of the bulkhead (22), in particular for gluing to the rotor blade (14) or to the rotor hub (9).

5. The bulkhead (22) according to Claim 4, **characterized in that** the contact surface (29) of the suspension device (28) is configured straight and/or conically.

6. The bulkhead (22) according to any one of Claims 1 to 5, configured in that the bulkhead (22), in particular the cover (26), has at least one, in particular lockable, access opening (24).

7. The bulkhead (22) according to any one of Claims 1 to 6, **characterized in that** the bulkhead (22), in particular the cover (26), has an anti-slip coating (32) on a side facing the connection region.

8. The bulkhead (22) according to any one of Claims 1 to 7, **characterized in that** the bulkhead (22), in particular the cover (26), has impact protection (34) on a side facing the rotor blade tip.

9. Arrangement of a bulkhead (22) on or in the vicinity of a connection region of a rotor blade (14), wherein the bulkhead (22) is configured according to any one of Claims 1 to 8.

10. A rotor blade (14) having a bulkhead (22) according to any one of Claims 1 to 8.

11. A rotor hub (9) having a bulkhead (22) according to any one of Claims 1 to 8.

## Revendications

1. Cloison (22) pour une éolienne (10) destinée à être placée au niveau ou à proximité d'une partie terminale d'une pale de rotor (14) sur un moyeu de rotor (9), dans lequel la cloison (22) comprend un couvercle d'extrémité (26) et un dispositif de suspension (28) pour la fixation sur la pale de rotor (14) ou sur le moyeu de rotor (9), **caractérisé en ce que** le couvercle d'extrémité (26) et le dispositif de suspension (28) sont réalisés selon une construction en stratifié de fibres.

2. Cloison (22) selon la revendication 1, **caractérisée en ce que** la cloison (22) comprend un stratifié avec de la résine renforcée de fibres de verre.

3. Cloison selon la revendication 1 ou la revendication 1, dans laquelle le dispositif de suspension (28) est conçu sous la forme d'un stratifié circonférentiel angulé, en particulier continu.

4. Cloison (22) selon l'une quelconque des revendications 1 à 3, **caractérisé en ce que** le dispositif de suspension (28) présente une surface de contact (29) pour fixer la cloison (22), en particulier pour un collage sur la pale de rotor (14) ou sur le moyeu de rotor (9).

5. Cloison (22) selon la revendication 4, **caractérisée en ce que** la surface de contact (29) du dispositif de suspension (28) est droite et / ou conique.

6. Cloison (22) selon l'une des revendications 1 à 5, dans laquelle la cloison (22), en particulier le couvercle d'extrémité (26), présente au moins une ouverture traversante (24), en particulier verrouillable.

7. Cloison (22) selon l'une quelconque des revendications 1 à 6, **caractérisé en ce que** la cloison (22), en particulier le couvercle d'extrémité (26), comprend un revêtement antidérapant (32) sur un côté tourné vers la zone de liaison.

8. Cloison (22) selon l'une quelconque des revendications 1 à 7, **caractérisé en ce que** la cloison (22), en particulier le couvercle d'extrémité (26), présente, sur son côté tourné vers l'emplanture de la pale de rotor, une protection contre les chocs (34).

9. Agencement d'une cloison (22) au niveau ou à proximité d'une zone de liaison d'une pale de rotor (14), la cloison (22) étant conçue selon l'une des revendications 1 à 8.

10. Pale de rotor (14) ayant une cloison (22) selon l'une des revendications 1 à 8.

11. Moyeu de rotor (9) ayant une cloison (22) selon l'une des revendications 1 à 8.
